# EUROPÄISCHE PATENTSCHRIFT

(11) **EP 2 890 243 B1**
(45) Veröffentlichungstag und Bekanntmachung des Hinweises auf die Patenterteilung: **14.03.2018**
(21) Anmeldenummer: 13753857.5
(22) Anmeldetag: 28.08.2013
(51) Int. Cl.: A22C 17/00, A22C 25/08, B65G 21/06

(54) **FÖRDERVORRICHTUNG FÜR ARTIKEL DER FISCH- UND FLEISCHVERARBEITENDEN INDUSTRIE**
CONVEYING APPARATUS FOR ITEMS IN THE FISH AND MEAT PROCESSING INDUSTRY
INSTALLATION DE TRANSPORT POUR DES PRODUITS DE L' INDUSTRIE DE TRAITEMENT DE POISSON ET DE VIANDE

(30) Priorität: 29.08.2012 DE 202012103282 U
(43) Veröffentlichungstag der Anmeldung: 08.07.2015
(73) Patentinhaber: Nordischer Maschinenbau Rud. Baader GmbH + Co. KG, 23560 Lübeck (DE)
(72) Erfinder: PEDERSEN, Henning, B., DK-7430 Ikast (DK)
(74) Vertreter: Stork Bamberger Patentanwälte PartmbB
(86) Internationale Anmeldenummer: PCT/EP2013/067832
(87) Internationale Veröffentlichungsnummer: WO 2014/033177

(56) Entgegenhaltungen:
- EP-A1- 0 794 137
- EP-A2- 1 767 474
- WO-A1-2011/012802
- WO-A2-2005/032979
- DE-A1- 19 519 792
- JP-U- S5 280 970
- US-A- 1 481 542
- US-A- 3 153 477
- US-A- 3 241 650
- US-A- 3 524 531
- US-A- 3 796 503
- US-A- 4 982 835
- US-A- 5 568 920
- US-A- 5 947 263
- US-A1- 2002 148 709
- US-B1- 6 612 420

## Beschreibung

Die vorliegende Erfindung betrifft eine Fördervorrichtung für Artikel der fisch- und fleischverarbeitenden Industrie, umfassend ein Transportband zum Fördern der Artikel in eine Förderrichtung, mindestens eine sich zumindest entlang eines Teilabschnitts des Transportbandes erstreckende Montagebasis sowie mindestens eine zur Interaktion mit den Artikeln eingerichtete Funktionseinheit, wobei jede der Funktionseinheiten an einem Haltemittel angeordnet ist.

Derartige Fördervorrichtungen kommen insbesondere beim Verteilen von Artikeln der fisch- und fleischverarbeitenden Industrie zum Einsatz. Bekannt sind Förder- und Verteilvorrichtungen, bei denen die Artikel mittels eines Transportbandes in eine Förderrichtung gefördert werden und mittels in den Transportweg hereinschwenkbarer Arme seitlich in Behälter oder auf weitere Transportbänder verteilt werden. Die Steuerung der Arme erfolgt in der Regel über Steuereinrichtungen, die in Abhängigkeit vorgegebener und/oder sensorisch ermittelter Artikeleigenschaften die Arme zu den entsprechenden Zeitpunkten ansteuern. Die Artikeleigenschaften werden beispielsweise durch am Transportband angeordnete Sensoren erfasst und von der Steuereinrichtung ausgewertet. Bei den bekannten Fördervorrichtungen sind die Funktionseinheiten, also die Arme, die Behälter bzw. die Sensoren, ortsfest angeordnet und in der Regel unlösbar mit dem Transportband bzw. dessen Unterbau dauerhaft verbunden.

Nachteilig ist, dass die bekannten Fördervorrichtungen jeweils nur für einen Anwendungsfall einsetzbar sind. Auch unter hygienischen Aspekten erweisen sich die vorgenannten Vorrichtungen als nachteilig, da die Reinigung von Transportband sowie der weiteren Teile der gesamten Fördervorrichtung aufgrund der Funktionseinheiten erheblich erschwert ist. Des Weiteren ist ein Austausch einzelner Funktionseinheiten insgesamt sehr aufwendig. US 4,982,835 beschreibt eine gattungsgemäße Vorrichtung. Es ist daher Aufgabe der vorliegenden Erfindung, eine leicht zu reinigenden Fördervorrichtung vorzuschlagen, die eine variable und einfache Anordnung von Funktionseinheiten gewährleistet.

Die Aufgabe wird durch eine Anordnung nach Anspruch 1 gelöst, wobei die Haltemittel derart ausgebildet und eingerichtet sind, dass jede der Funktionseinheiten mittels der Haltemittel mit der Montagebasis lösbar verbunden und zumindest in Förderrichtung justierbar angeordnet ist. Dies bietet den Vorteil, dass sowohl die Position der jeweiligen Funktionseinheit als auch der Typ der Funktionseinheiten frei konfigurierbar ist. So können als Funktionseinheiten sowohl Sensoren bzw. Sensorsysteme, wie beispielsweise optische Kamerasysteme, Wiegeeinrichtungen oder dergleichen, als auch Aktuatoren, beispielsweise steuerbare Arme und/oder Klappen, Bearbeitungswerkzeuge, Abstreifer oder dergleichen, mit der Montagebasis verbunden und auf einfache Weise wieder von dieser gelöst werden. Auch können als Funktionseinheiten beispielsweise Körbe bzw. Kästen angeordnet werden, so dass die Fördervorrichtung zugleich als Verteilereinrichtung ausgebildet ist. Durch die justierbare Anordnung der Funktionseinheiten in Förderrichtung können die Funktionseinheiten exakt positioniert und ggf. nachjustiert werden. Mit anderen Worten sind die Funktionseinheiten parallel zu dem Transportband bewegbar angeordnet, während diese bzgl. der weiteren Raumrichtungen fixiert sind. Ein weiterer Vorteil besteht darin, dass die Funktionseinrichtungen bzw. die Haltemittel auf einfache Weise von der Montagebasis gelöst werden können, so dass einerseits ein schneller Austausch einzelner Funktionselemente ermöglicht und andererseits die Reinigung von Teilen der Fördervorrichtung wesentlich gegenüber starr angeordneter Funktionseinheiten erleichtert wird.

Eine zweckmäßige Ausgestaltung der Erfindung ist dadurch gekennzeichnet, dass das Haltemittel mindestens ein Fußelement mit einem Aufnahmebereich umfasst, wobei der Aufnahmebereich zumindest teilweise korrespondierend zum Querschnitt der Montagebasis ausgebildet ist. Mittels des korrespondierend zum Querschnitt der Montagebasis ausgebildeten Aufnahmebereichs des Fußelements wird das Halteelement in Position gehalten und zugleich eine Bewegbarkeit bzw. eine Justierbarkeit parallel zum Transportband gewährleistet.

Eine bevorzugte Weiterbildung der Erfindung zeichnet sich dadurch aus, dass der Aufnahmebereich des Fußelements derart ausgebildet ist, dass das Fußelement die Montagebasis unter Formschluss zumindest teilweise umgreift. Anders ausgedrückt umschließt das Fußelement den Querschnitt der Montagebasis nicht vollständig, so dass die Montagebasis in den nicht umschlossenen Bereichen an der Fördervorrichtung oder dem Untergrund, beispielsweise mittels Querstreben, abgestützt werden kann.

Gemäß einer weiteren zweckmäßigen Ausbildung der Erfindung ist das Fußelement derart ausgebildet, dass das Fußelement kraftschlüssig mit der Montagebasis verbunden ist. Dies bietet den Vorteil, dass das Fußelement ausschließlich oder zusätzlich durch Kraftschluss lösbar an der Montagebasis angeordnet ist.

Eine weitere vorteilhafte Weiterbildung der Erfindung zeichnet sich dadurch aus, dass das Fußelement mindestens zwei Klemmelemente umfasst, die zum Verbinden der Fußelemente mit der Montagebasis ausgebildet und eingerichtet sind. Mit anderen Worten ist die Verbindung zwischen dem Fußelement und der Montagebasis als Klemmverbindung ausgebildet. Durch die Klemmung ist das Fußelement zuverlässig an der Montagebasis befestigt.

Gemäß einer weiteren bevorzugten Ausbildung der Erfindung sind das Fußelement und die Montagebasis als Linearführung ausgebildet. Auf diese Weise sind die Haltemittel und die Funktionseinheiten in einer Richtung, vorzugsweise parallel zur Förderrichtung, verschiebbar ausgebildet, so dass einerseits die Gewichtskräfte von der Montagebasis aufgenommen und die Funktionseinheiten sicher gehalten werden und andererseits zugleich eine leichte Justierbarkeit gewährleistet ist.

Eine bevorzugte Ausbildung der Erfindung zeichnet sich dadurch aus, dass die Klemmelemente als Klemmbügel ausgebildet sind. Mittels der Klemmbügel ist das Fußelement einerseits auf besonders einfache Art und Weise mit der Montagebasis verbindbar und von dieser wieder lösbar ausgebildet und eingerichtet. Andererseits ist der Klemmbügel aufgrund seiner einfachen Geometrie aus hygienischer Sicht besonders vorteilhaft, da Anhaftungen von Verschmutzungen auf ein Minimum reduziert werden bzw. die Klemmbügel leicht gereinigt und so Verschmutzen einfach abgelöst werden können.

Eine weitere zweckmäßige Ausbildung der Erfindung ist dadurch gekennzeichnet, dass das Haltemittel zumindest ein Arretierungsmittel umfasst, das zum form- und/oder kraftschlüssigen Arretieren des Haltemittels an der Montagebasis ausgebildet und eingerichtet ist. Auf diese Weise können die Haltemittel in ihrer Endposition an der Montagebasis gesichert werden, so dass diese ortsfest angeordnet sind. Durch Lösen des Arretierungsmittels sind die Haltemittel relativ zu der Montagebasis bewegbar und können im Bedarfsfall nach- bzw. neu justiert werden.

Gemäß einer weiteren bevorzugten Ausführungsform umfasst das Haltemittel mehrere der Fußelemente, wobei die Fußelemente voneinander beabstandet sind. Dies bietet den Vorteil einer erhöhten Stabilität der Verbindung zwischen der Montagebasis und der Halteelemente bzw. den jeweils zugeordneten Funktionseinheiten.

Eine weitere zweckmäßige Ausgestaltung der Erfindung ist dadurch gekennzeichnet, dass das Haltemittel und das Fußelement einstückig ausgebildet sind. Anders ausgedrückt sind das Haltemittel und das Fußelement bevorzugt aus einem Stück gebildet, beispielsweise als ein aus dem Vollen gefrästes Gesamtteil. Die Montagebasis ist als Mehrkantprofil ausgebildet. Aufgrund des Formschlusses zwischen den Haltemitteln und dem Mehrkantprofil ist das Haltemittel so gegen ein unerwünschtes Verdrehen bzgl. der Längsachse der Montagebasis gesichert. Die Erfindung zeichnet sich dadurch aus, dass die Montagebasis ein Vierkantprofil ist, wobei das Vierkantprofil derart angeordnet ist, dass eine der Querschnittsdiagonalen des Vierkantprofils zumindest im Wesentlichen parallel zur Transportbandebene ist. Mit anderen Worten ist das Vierkantprofil derart ausgerichtet, dass jeweils zwei einander gegenüberliegende Kanten des Vierkantprofils in der Horizontalen bzw. in der Vertikalen angeordnet sind, während die Vierkantprofilflächen jeweils gegenüber der Horizontalen bzw. der Vertikalen um 45° geneigt sind. Dies bietet den Vorteil, dass Verunreinigen aufgrund der geneigt angeordneten Vierkantprofilflächen leicht entfernt werden können, da Reinigungsmittel von den schräg geneigten Vierkantprofilflächen besonders leicht abläuft. Alternativ ist die Querschnittsdiagonale um einen kleinen Winkelbetrag, beispielsweise kleiner 30°, gegenüber der Horizontalen bzw. der Vertikalen geneigt.

Gemäß einer weiteren zweckmäßigen Ausgestaltung umfasst das Fußelement zumindest zwei Halteschenkel, die die nach außen gerichteten Vierkantprofilflächen unter Formschluss vollständig umgreifen. Mit anderen Worten sind die Halteschenkel derart eingerichtet und ausgebildet, dass diese formschlüssig an den nach außen gerichteten Vierkantprofilflächen, also an denjenigen Flächen der Montagebasis anliegen, die von der Mitte des Transportbands weg gerichtet sind.

Eine weitere zweckmäßige Ausgestaltung sieht vor, dass an den Halteschenkeln jeweils ein Umgreifelement angeordnet ist, das jeweils die einander gegenüberliegenden Vierkantprofilflächen unter Formschluss auf einem Teilbereich umgreift, d.h. dass die Umgreifelemente derart eingerichtet und ausgebildet sind, dass diese die jeweilige Kante der Montagebasis umgreifen und zumindest mit einem Teilbereich der einander gegenüberliegenden Profilflächen unter Formschluss in Kontakt sind. Die einander gegenüberliegenden Vierkantprofilflächen bezeichnen diejenigen Flächen der Montagebasis, die zur Transportbandmitte gerichtet sind.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt
- Fig. 1: eine perspektivische Übersichtsdarstellung der erfindungsgemäßen Fördervorrichtung,
- Fig. 2: eine Detailansicht der in Fig. 1 gezeigt Fördervorrichtung,
- Fig. 3: eine perspektivische Darstellung einer Funktionseinheit mit Haltemitteln,
- Fig. 4: eine perspektivische Darstellung eines als Klemmelement ausgebildeten Fußelements,
- Fig. 5: eine alternative Ausgestaltung eines an der Montagebasis angeordneten Klemmelements im Querschnitt,
- Fig. 6: eine weitere Ausgestaltung eines Fußelements mit als Klemmbügeln ausgebildeten Klemmelementen und
- Fig.7: eine perspektivische Darstellung eines Standfußes mit dem in Fig. 6 gezeigten Fußelement mit Klemmbügeln.

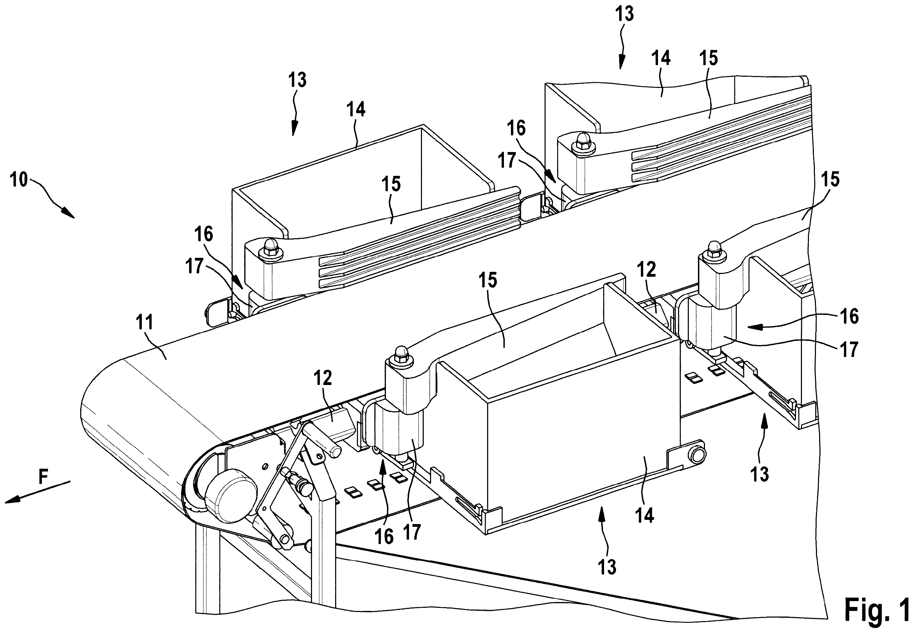

Die Figur 1 zeigt eine perspektivische Übersichtsdarstellung der erfindungsgemäßen Fördervorrichtung 10. Die Fördervorrichtung 10 eignet sich insbesondere für Artikel der fisch- und/oder fleischverarbeitenden Industrie, ist nicht jedoch nicht ausschließlich auf diese Artikel beschränkt. Ferner eignet sich die vorliegende Erfindung insbesondere zur Verteilung der Artikel. Die Fördervorrichtung 10 umfasst ein Transportband 11, beispielsweise ein endlos umlaufendes Transportband 11, mittels dessen die Artikel auf dem Transportband 11 in eine Förderrichtung F gefördert werden. Entlang zumindest eines Teilabschnittes des Transportbandes 11 erstreckt sich eine Montagebasis 12. Vorzugsweise erstreckt sich die Montagebasis 12 im Wesentlichen über die gesamte Transportbandlänge. Besonders bevorzugt ist die Montagebasis 12 beidseitig des Transportbandes 11 angeordnet. Alternativ ist die Montagebasis 12 im Zwischenraum des umlaufenden Transportbandes 11 angeordnet. Auch ist es möglich, die Montagebasis 12 unterhalb des Transportbandes 11 anzuordnen.

Die Fördervorrichtung 10 umfasst ferner mindestens eine Funktionseinheit 13. Die Funktionseinheit 13 ist zur Interaktion mit den auf dem Transportband 11 geförderten Artikeln ausgebildet und eingerichtet. Die Funktionseinheiten 13 sind beispielsweise als Sensorsysteme bzw. Sensoreinheiten, wie beispielsweise optische, akkustische, elektromagnetische Sensoren und/oder als Wiegeeinrichtungen ausgebildet. Ferner können die Funktionseinheiten 13 Aktuatoren umfassen, beispielsweise steuerbare Klappen oder Abstreifer, Hebel, Arme, Label-Drucker oder dergleichen. Die Funktionseinheiten 13 können ferner als statische Einheiten, wie z.B. die in der Figur 1 gezeigten Behälter 14, ausgebildet sein.

In der Figur 1 sind beispielsweise als gesteuerte Arme 15 ausgebildete Funktionseinheiten 13 gezeigt, mittels derer Artikel von dem Transportband 11 in verschiedene als Behälter 14 ausgebildete Funktionseinheiten 13 überführt werden können. Die in der Figur 1 gezeigte Anordnung der Funktionseinheiten 13 aus gesteuerten Armen 15 und Behältern 14 dient ausschließlich einer anschaulichen Darstellung. Die Erfindung ist jedoch nicht ausschließlich auf die in der Figur 1 gezeigte Anordnung der Funktionseinheiten 13 beschränkt. Vielmehr ist jede beliebige Zusammenstellung aus mehreren Funktionseinheiten 13 gleicher oder unterschiedlicher Funktion möglich. Beispielsweise können den Behältern 14 und den Armen 15 weitere - in der Zeichnung nicht gezeigte - Funktionseinheiten 13 vorgeschaltet sein, wie z.B. Wiegeeinrichtungen zur Bestimmung der Artikelgewichte und/oder optische oder mechanische Sensorsysteme zur Analyse der Artikeleigenschaften. Beispielsweise erfolgt die Ansteuerung der Arme 15 auf Basis der mittels als Sensorsysteme ausgebildeten Funktionseinheiten 13 ermittelten Artikeleigenschaften, so dass die Artikel z.B. nach ihrem Gewicht oder nach anderen vorgegebenen Artikeleigenschaften in die jeweiligen als Behälter 14 ausgebildeten Funktionseinheiten 13 verteilt werden.

Die Funktionseinheiten 13 sind an einem Haltemittel 16 angeordnet. Das Haltemittel 16 ist einerseits lösbar mit der Montagebasis 12 verbunden und zumindest in Förderrichtung F justierbar angeordnet. Anders ausgedrückt ist das Haltemittel 16 derart ausgebildet und eingerichtet, dass dieses lösbar mit der Montagebasis 12 verbunden und zugleich in Förderrichtung F justierbar ist. Auf diese Weise können die Funktionseinheiten 13 ohne großen Montageaufwand an der Montagebasis 12 befestigt und bei Bedarf wieder von dieser gelöst werden. Zusätzlich wird eine exakte Positionierung der Funktionseinheiten 13 ermöglicht, da die Haltemittel 16 zumindest in Förderrichtung F justierbar ausgebildet sind. Alternativ können die Haltemittel 16 derart ausgebildet sein, dass diese nicht ausschließlich in Förderrichtung F justierbar eingerichtet sind, sondern vielmehr auch in weitere Raumrichtungen linear positionierbar und/oder um weitere Achsen drehbar ausgebildet sind.

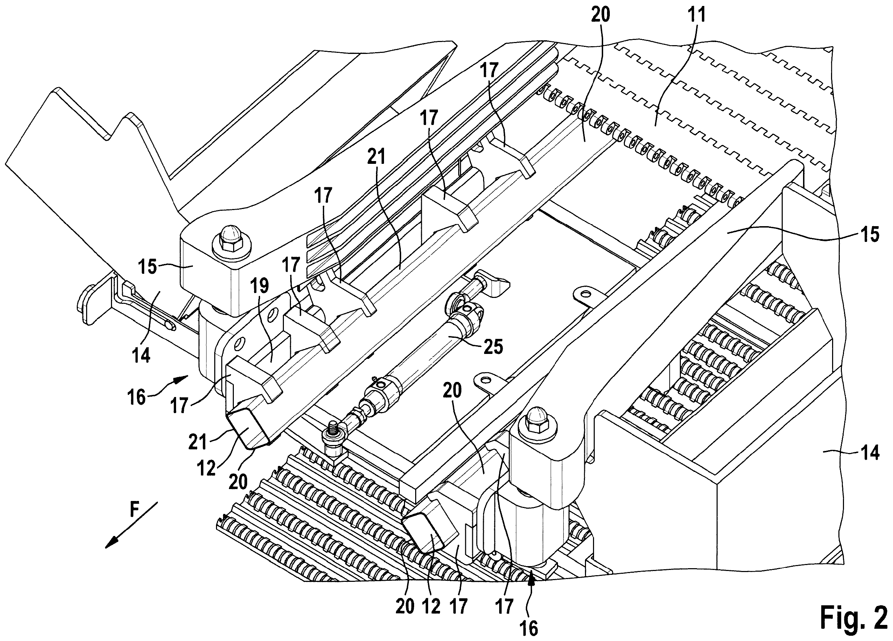

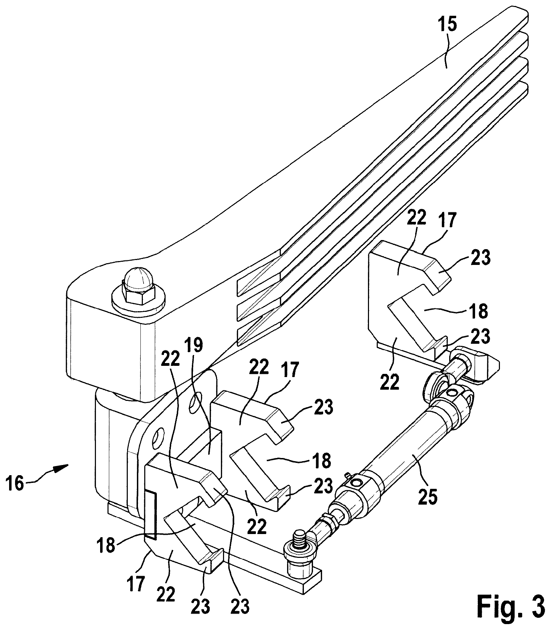

Wie in den Figuren 2 und 3 gezeigt, umfasst das Haltemittel 16 mindestens ein Fußelement 17 mit einem Aufnahmebereich 18, der zumindest teilweise korrespondierend zum Querschnitt der Montagebasis 12 ausgebildet ist. Besonders bevorzugt ist der Aufnahmebereich 18 des Fußelements 17 derart ausgebildet, dass das Fußelement 17 die Montagebasis 12 unter Formschluss teilweise umgreift. Alternativ ist das Fußelement 17 so eingerichtet, dass dieses die Montagebasis 12 vollständig umgreift.

Weiter bevorzugt sind das Fußelement 17 und die Montagebasis 12 als Linearführung ausgebildet. Mit anderen Worten ist das Fußelement 17 in und gegen die Förderrichtung F relativ zu der Montagebasis 12 linear verschiebbar ausgebildet. Vorteilhafter Weise umfasst das Haltemittel 16 zumindest ein - in den Zeichnung nicht gezeigtes - Arretierungsmittel, das zum form- und/oder kraftschlüssigen Arretieren des Haltemittels 16 an der Montagebasis 12 ausgebildet und eingerichtet ist. Beispielsweise umfasst das Arretierungsmittel mindestens eine in einer Gewindebohrung des Fußelements 17 angeordnete Gewindeschraube, mittels derer das Fußelement 17 bzw. das Haltemittel 16 an der Montagebasis 12 arretiert wird, so dass das Halteelement 16 an der Montagebasis 12 fixiert ist.

Vorzugsweise umfasst das Haltemittel 16 mehrere der Fußelemente 17. Die Fußelemente 17 sind dabei voneinander beabstandet angeordnet und weiter bevorzugt über eine Fußelementbasis 19 miteinander verbunden. Besonders bevorzugt sind die Fußelemente 17 zu mehreren rechtwinklig an der Fußelementbasis 19 des Fußelements 17 angeordnet.

Vorteilhafter Weise ist das Haltemittel 16 und das Fußelement 17 bzw. sind das Haltemittel 16 und die Fußelemente 17 einstückig ausgebildet. Alternativ sind Haltemittel 16 und das/ die Fußelement(e) 17 mehrteilig ausgebildet und miteinander form- und/oder kraftschlüssig verbunden.

Vorzugsweise ist die Montagebasis 12 als Hohlprofil, beispielsweise als Edelstahlhohlprofil, ausgebildet. Besonders bevorzugt ist die Montagebasis 12 als Mehrkantprofil ausgebildet, beispielsweise als das in der Zeichnung gezeigte Vierkantprofil. Vorteilhafter Weise ist die als Vierkantprofil ausgebildete Montagebasis 12 derart angeordnet, dass eine der Querschnittsdiagonalen des Vierkantprofils parallel zur Transportebenen des Transportbands 11 bzw. zumindest im Wesentlichen parallel, d.h. um einen kleinen Winkelbetrag, vorzugsweise zwischen 0° und 30°, geneigt dazu, angeordnet ist. Auf diese Weise sind die Vierkantprofilflächen 20, die einander zugewandt sind und die Vierkantprofilflächen 21, die von einander weggewandt sind gegenüber der Horizontalen und der Vertikalen geneigt angeordnet.

Weiter bevorzugt umfasst das Fußelement 17 zumindest zwei Halteschenkel 22. Die Halteschenkel 22 sind derart eingerichtet und ausgebildet, dass diese die nach außen gerichteten Vierkantprofilflächen 21 unter Formschluss vollständig umgreifen.

Vorteilhafter Weise ist an den Halteschenkeln 22 jeweils ein Umgreifelement 23 angeordnet, das jeweils die einander gegenüberliegenden Vierkantprofilflächen 20 unter Formschluss auf einem Teilbereich umgreift.

Wie in der Figur 1 gezeigt, sind vorteilhafter Weise mehrere der Funktionseinheiten 13 verschiedener Funktion in einem Bereich des Transportbands 11 mittels der Haltemittel 16 angeordnet. So sind als Funktionseinheiten 13 jeweils einer der Behälter 14 sowie einer der gesteuerten Arme 15 mittels der Haltemittel in dem vorgenannten Bereich angeordnet. Vorzugsweise ist der Arm 15 mittels eines hydraulischen oder pneumatischen Zylinders 25 verschwenkbar ausgebildet, so dass auf dem Transportband 11 geförderte Artikel durch Ansteuern der Arme 15 in die jeweiligen Behälter 14 verteilt werden.

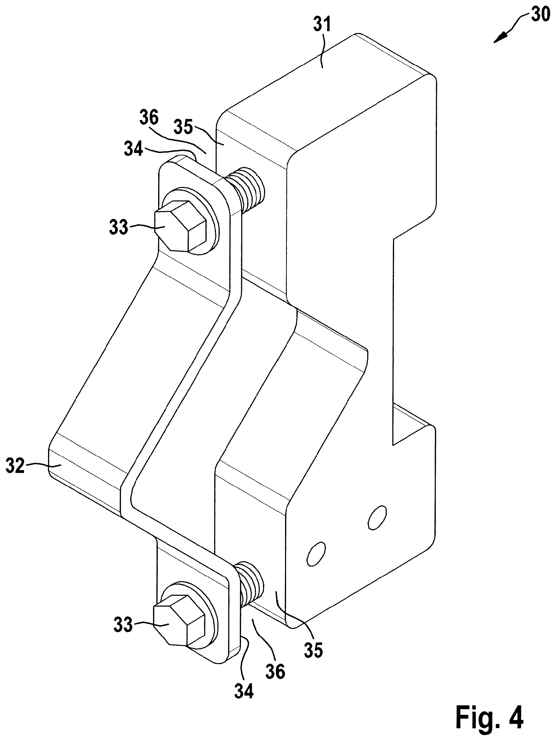

In der Figur 4 ist eine perspektivische Darstellung eines als Klemmelement 30 ausgebildeten Fußelements 17 gezeigt. Das Fußelement 17 ist derart ausgebildet, dass das Fußelement kraftschlüssig mit der - in der Figur 4 nicht gezeigten - Montagebasis 12 verbunden ist. Das Klemmelement 30 umfasst einen Grundkörper 31 sowie einen Klemmbügel 32. Der Grundkörper 31 entspricht im Wesentlichen dem bereits zuvor beschriebenen Fußelement 17 mit dem entsprechend an die Montagebasis 12 angepassten Aufnahmebereich 18. Der Klemmbügel 32 ist ebenfalls korrespondierend zur Geometrie der Montagebasis 12 derart ausgebildet, dass der Klemmbügel 32 zusammen mit dem Grundkörper 31 die Montagebasis 12 vollständig umschließt. Vorzugsweise umfasst der Klemmbügel 32 zwei Bohrungen durch die jeweils eine Gewindeschraube 33 geführt ist. Zur Aufnahme der Gewindeschraube 33 weist das Klemmelement 30 entsprechende Gewindebohrungen auf, in die die Gewindeschraube 33 eingeschraubt ist. Der Klemmbügel 32 und das Fußelement 17 sind derart eingerichtet, dass zwischen den Klemmflächen 34 der Klemmbügel 32 und der Anlagefläche 35 des Fußelements 17 ein Spalt 36 verbleibt, wenn der Klemmbügel 32 an der Montagebasis 12 eng anliegt. Die Klemmung des Fußelement 17 mit dem Klemmbügel 32 wird durch elastische Verformung des Klemmbügels 32 beim Anziehen der Gewindeschrauben 33 erzielt.

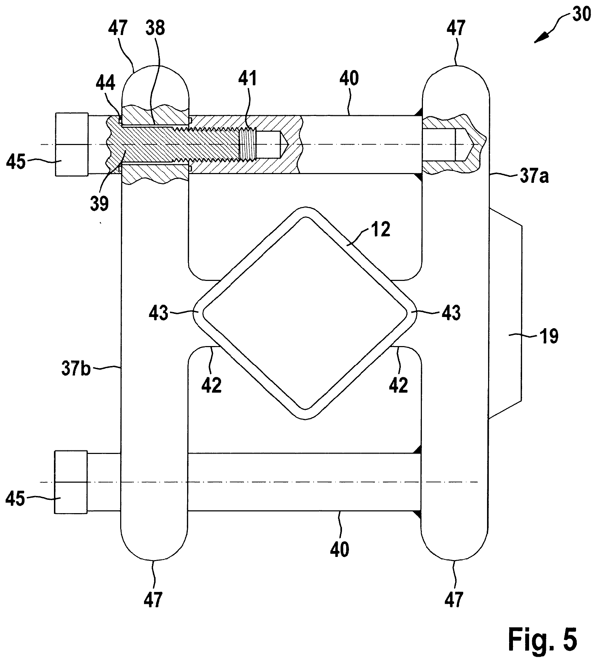

Die Figur 5 zeigt ein an der Montagebasis 12 angeordnetes Klemmelement 30 gemäß einer weiteren vorteilhaften Ausgestaltung im Querschnitt. Das Klemmelement 30 umfasst zwei Klemmkörper 37a, 37b, die mittels zweier Stegelemente 40 miteinander verbunden sind. Vorzugsweise ist die Verbindung der Stegelemente 40 mit einem der Klemmkörper 37a stoffschlüssig, beispielsweise verschweißt, ausgebildet, während die Verbindungen der Stegelement 40 mit dem jeweils anderen der Klemmkörper 37b kraftschlüssig ausgebildet sind. Besonders bevorzugt weisen die Stegelemente 40 an der dem Klemmkörper 37a zugewandten Seite einen - in der Zeichnung nicht gezeigten - Zapfen auf. Korrespondierend dazu weist der Klemmkörper 37a innenseitig, d.h. an der dem Stegelement 40 zugewandten Seite, ein Gewindesackloch auf. Auf diese Weise lassen sich die Stegelemente 40 exakt an dem Klemmkörper 37a positionieren und zentrieren. Die endgültige Verbindung der Stegelemente 40 mit dem Klemmkörper 37a erfolgt im Anschluss formschlüssig, vorzugsweise durch Verschweißen.

Gemäß einer in der Figur 5 nicht gezeigten weiteren alternativen Ausführung sind die Stegelemente 40 geschraubt und gedichtet an dem Klemmkörpern 37a angeordnet. Einer der Klemmkörper 37b umfasst zwei Durchgangsbohrungen 38, durch die jeweils eine Gewindeschraube 39 geführt ist. Die Stegelemente 40 umfassen auf der dem Klemmkörper 37b zugewandten Seite jeweils eine Gewindebohrung 41, die zur Aufnahme der Gewindeschrauben 39 ausgebildet ist. Die Gewindeschrauben 39 sind vorzugsweise im Bereich der Durchgangsbohrungen 38 gewindefrei ausgebildet. Mittels der Gewindeschrauben 39 ist der Klemmkörper 37b mit den Stegelementen 40 verschraubbar eingerichtet. Anders ausgedrückt wird der Klemmkörper 37b mittels der Gewindeschrauben 39 gegen die Stegelemente 40 und damit gegen den Klemmkörper 37a gezogen, so dass die Klemmkörper 37a, 37b an zwei gegenüberliegenden Seiten gegen die Montagebasis 12 gedrückt werden und so eine kraftschlüssige Verbindungen zwischen den Klemmkörpern 37a, 37b und der Montagebasis 12 zu Stande kommt. Vorzugsweise umfassen die Klemmkörper 37a, 37b an den der Montagebasis 12 zugewandten Seiten jeweils Formelemente 42, die korrespondierend zu der Montagebasis 12 ausgebildet sind. Ist die Montagebasis 12 beispielsweise, wie in der Figur 5 gezeigt, als Vierkantprofil ausgebildet, so sind die Formelemente 42 als Vorsprung mit einem Aufnahmebereich zur Aufnahme der Kantenbereiche 43 des Vierkantprofils ausgebildet.

Besonders bevorzugt umfassen die Gewindeschrauben 39 jeweils ein Dichtmittel 44, das zwischen dem Schraubenkopf 45 und der Oberfläche der jeweiligen Klemmkörper 37 unter dichtem Sitz angeordnet ist. Beispielsweise weist der Schraubenkopf 45 eine umlaufende Nut auf, in die ein O-Ring eingesetzt ist. Auf diese Weise wird ein andernfalls mögliches Eindringen von Verschmutzungen in die Durchgangsbohrungen 38 und/oder in den Gewindebereich der Gewindeschrauben 39 zuverlässig verhindert. Insgesamt zeichnet sich das in der Figur 5 gezeigt Fußelement 17 besonders durch die vorteilhaften Wirkungen hinsichtlich der Hygiene aus, da sämtliche Teile möglichst glatte Oberflächen aufweisen und alle Bereiche von außen gut zugänglich sind. Darüber hinaus sind keine Hohlräume von außen unmittelbar zugänglich, in denen sich Verschmutzen andernfalls ablagern könnten.

Vorzugsweise umfasst das Haltemittel 16 mehrere der Fußelemente 17 bzw. der Klemmelemente 30. Die Klemmelemente sind dabei voneinander beabstandet angeordnet und weiter bevorzugt über die - bereits zuvor - beschriebene Fußelementbasis 19 miteinander verbunden. Besonders bevorzugt sind die Fußelemente 17 zu mehreren rechtwinklig an der Fußelementbasis 19 angeordnet. Weiter bevorzugt umfasst die Fußelementbasis 19 gegenüber der Horizontalen geneigt ausgebildete Seitenflächen, um ein Ablaufen von Flüssigkeiten und/oder Verschmutzungen zu fördern.

Weiter bevorzugt sind die Oberflächen zumindest im Randbereich 47 der Klemmelemente 30 abgerundet ausgebildet und eingerichtet, um unerwünschte Anlagerungen von Verschmutzen effektiv zu verhindern. Anders ausgedrückt sind die Klemmelemente 30 zumindest im Wesentlichen eck- und/oder kantenfrei ausgebildet.

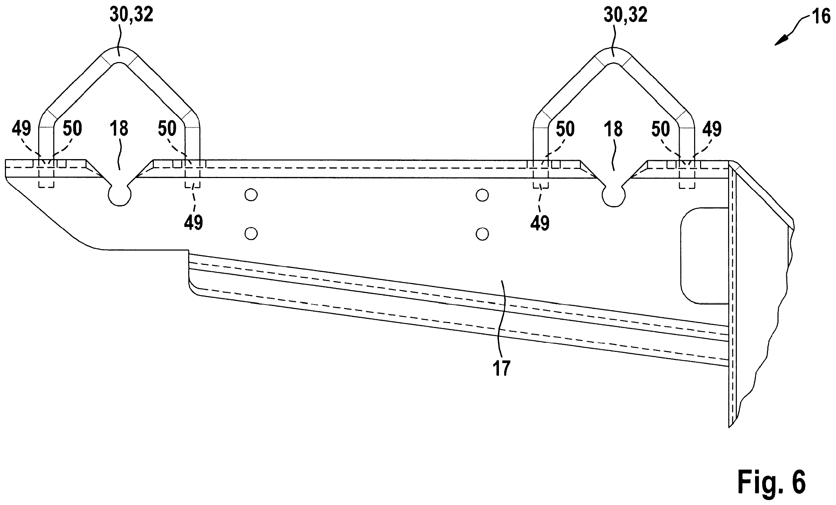

Die Figur 6 zeigt eine weitere vorteilhafte Ausgestaltung des Fußelements 17 mit den als Klemmbügeln 32 ausgebildeten Klemmelementen 30, die zusammen das Haltemittel 16 bilden. Die Klemmbügel 32 sind vorzugweise teilweise korrespondierend zur - in der Figur 6 nicht gezeigten - Montagebasis 12 ausgebildet. Die Montagebasis 12 wird so einerseits von den Klemmbügeln 32 und andererseits von dem Fußelement 17 mit seinem Aufnahmebereich 18 vollständig umschlossen. Besonders bevorzugt umfassen die Klemmbügel 32 an ihren freien Schenkeln 49 jeweils ein Außengewinde. Das Fußelement 17 weist jeweils zwei Durchgangsbohrungen 50 auf, die zur Aufnahme der Klemmbügel 32 ausgebildet sind. Auf diese Weise werden die Klemmelemente 32 mit - in der Figur 6 nicht gezeigten Muttern - an dem Fußelement 17 verschraubt und somit der Klemmbügel 32 gegen die Montagebasis 12 verspannt, so dass das Fußelement 17 mit der Montagebasis 12 kraft- und/oder formschlüssig verbunden ist.

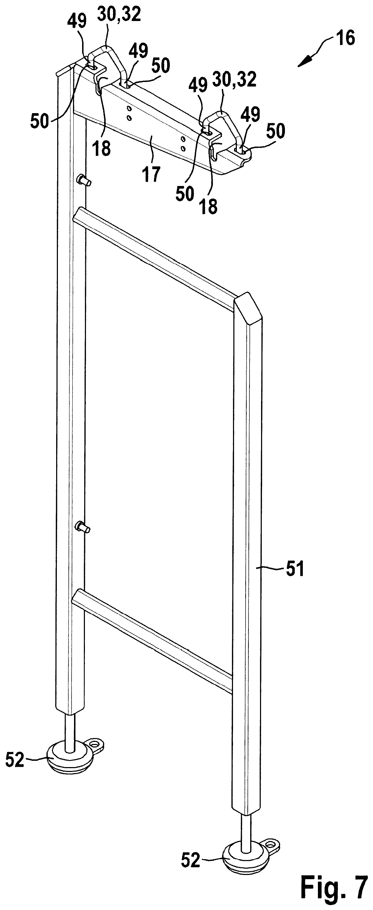

An den Haltemitteln 16, die das Fußelement 17 und die Klemmbügel 32 umfassen, sind - wie bereits eingangs beschriebenen - die Funktionseinheiten 13 (in der Figur 6 nicht gezeigt) angeordnet. Gemäß einer weiteren vorteilhaften Ausgestaltung der Erfindung, die in einer perspektivischen Darstellung in der Figur 7 gezeigt ist, ist an zumindest einem der Fußelemente 17 ein Untergestell 51 angeordnet. Das Untergestell 51 umfasst vorzugsweise höhenverstellbare Standfüße 52.

Gemäß einer vorteilhaften und in der Zeichnung nicht gezeigten weiteren Ausführungsform umfasst die Fördervorrichtung 10 mindestens zwei, besonders bevorzugt mehrere, der Untergestelle 51. Die Montagebasis 12 ist jeweils zwischen den Klemmbügeln 32 und den Fußelementen 17 durchgeführt und auf diese Weise mit den Haltemitteln 16 verbunden. Die Untergestelle 51 bilden auf diese Weise zusammen mit der Montagebasis 12 einen Unterbau, der mittels der Untergestelle 51 gegenüber dem Untergrund abgestützt ist.

Alternativ sind an dem Untergestell 51 die zuvor genannten und in den Figuren 1 bis 5 beschriebenen Haltemittel 16 zur Verbindung des Untergestells 51 mit der Montagebasis 12 angeordnet. Zur Vermeidung von Wiederholung wird auf die entsprechenden Passagen der Beschreibung in diesem Zusammenhang verwiesen.

## Patentansprüche

1. Fördervorrichtung (10) für Artikel der fisch- und fleischverarbeitenden Industrie, umfassend
ein Transportband (11) zum Fördern der Artikel in eine Förderrichtung (F),
mindestens eine sich zumindest entlang eines Teilabschnitts des Transportbandes (11) erstreckende Montagebasis (12) sowie mindestens eine zur Interaktion mit den Artikeln eingerichtete Funktionseinheit (13), wobei
jede der Funktionseinheiten (13) an einem Haltemittel (16) angeordnet ist, wobei die Haltemittel (16) derart ausgebildet und eingerichtet sind, dass jede der Funktionseinheiten (13) mittels der Haltemittel (16) mit der Montagebasis (12) lösbar verbunden und zumindest in Förderrichtung (F) justierbar angeordnet ist, **dadurch gekennzeichnet, dass** die Montagebasis (12) ein Vierkantprofil ist, wobei das Vierkantprofil derart angeordnet ist, dass eine der Querschnittsdiagonalen des Vierkantprofils zumindest im Wesentlichen parallel zur Transportbandebene ist.

2. Fördervorrichtung nach Anspruch 1, **dadurch gekennzeichnet, dass** das Haltemittel (16) mindestens ein Fußelement (17) mit einem Aufnahmebereich (18) umfasst, wobei der Aufnahmebereich (18) zumindest teilweise korrespondierend zum Querschnitt der Montagebasis (12) ausgebildet ist.

3. Fördervorrichtung nach Anspruch 2, **dadurch gekennzeichnet, dass** der Aufnahmebereich (18) des Fußelements (17) derart ausgebildet ist, dass das Fußelement (17) die Montagebasis (12) unter Formschluss zumindest teilweise umgreift.

4. Fördervorrichtung nach einem der Ansprüche 2 oder 3, **dadurch gekennzeichnet, dass** das Fußelements (17) derart ausgebildet ist, dass das Fußelement (17) kraftschlüssig mit der Montagebasis (12) verbunden ist.

5. Fördervorrichtung nach Anspruch 4, **dadurch gekennzeichnet, dass** das Fußelement (17) mindestens zwei Klemmelemente (30) umfasst, die zum Verbinden der Fußelemente (17) mit der Montagebasis (12) ausgebildet und eingerichtet sind.

6. Fördervorrichtung nach einem der Ansprüche 2 bis 5, **dadurch gekennzeichnet, dass** das Fußelement (17) und die Montagebasis (12) als Linearführung ausgebildet sind.

7. Fördervorrichtung nach Anspruch 5, **dadurch gekennzeichnet, dass** die Klemmelemente (30) als Klemmbügel (32) ausgebildet sind.

8. Fördervorrichtung nach einem der Ansprüche 1 bis 7, **dadurch gekennzeichnet, dass** das Haltemittel (16) zumindest ein Arretierungsmittel umfasst, das zum form- und/oder kraftschlüssigen Arretieren des Haltemittels (16) an der Montagebasis (12) ausgebildet und eingerichtet ist.

9. Fördervorrichtung nach einem der Ansprüche 2 bis 8, **dadurch gekennzeichnet, dass** das Haltemittel (16) mehrere der Fußelemente (17) umfasst, wobei die Fußelemente (17) voneinander beabstandet sind.

10. Fördervorrichtung nach einem der Ansprüche 2 bis 9, **dadurch gekennzeichnet, dass** das Haltemittel (16) und das Fußelement (17) einstückig ausgebildet sind.

11. Fördervorrichtung nach einem der Ansprüche 1 bis 10, **dadurch gekennzeichnet, dass** die Montagebasis (12) als Hohlprofil ausgebildet ist.

12. Fördervorrichtung nach Anspruch 2, **dadurch gekennzeichnet, dass** das Fußelement (17) zumindest zwei Halteschenkel (22) umfasst, die die nach außen gerichteten Vierkantprofilflächen (21) unter Formschluss vollständig umgreifen.

13. Fördervorrichtung nach Anspruch 12, **dadurch gekennzeichnet, dass** an den Halteschenkeln (22) jeweils ein Umgreifelement (23) angeordnet ist, das jeweils die einander gegenüberliegenden Vierkantprofilflächen (20) unter Formschluss auf einem Teilbereich umgreift.

## Claims

1. Conveying apparatus (10) for items in the fish and meat processing industry, comprising
a conveyor belt (11) for conveying the items in a conveying direction (F),
at least one mounting base (12) extending at least along a partial section of the conveyor belt (11) and
at least one functional unit (13) configured for interaction with the items, wherein
each of the functional units (13) is arranged on a holding means (16),
wherein
the holding means (16) are designed and adapted in such a manner that each of the functional units (13) is separably connected to the mounting base (12) by means of the holding means (16) and is arranged so as to be adjustable at least in the conveying direction (F),
**characterised in that**
the mounting base (12) is a square profile, wherein the square profile is arranged in such a manner that one of the cross-sectional diagonals of the square profile is at least essentially parallel to the conveyor belt plane.

2. Conveying apparatus according to claim 1, **characterised in that** the holding means (16) comprises at least one foot element (17) with a receiving area (18), wherein the receiving area (18) is designed at least partially corresponding to the cross-section of the mounting base (12).

3. Conveying apparatus according to claim 2, **characterised in that** the receiving area (18) of the foot element (17) is designed in such a manner that the foot element (17) at least partially encompasses the mounting base (12) in a positive locking manner.

4. Conveying apparatus according to one of claims 2 or 3, **characterised in that** the foot element (17) is designed in such a manner that the foot element (17) is joined to the mounting base (12) in a non-positive locking manner.

5. Conveying apparatus according to claim 4, **characterised in that** the foot element (17) comprises at least two clamping elements (30) which are designed and adapted for joining the foot elements (17) to the mounting base (12).

6. Conveying apparatus according to any one of claims 2 to 5, **characterised in that** the foot element (17) and the mounting base (12) are designed as a linear guide.

7. Conveying apparatus according to claim 5, **characterised in that** the clamping elements (30) are configured as clamps (32).

8. Conveying apparatus according to any one of claims 1 to 7, **characterised in that** the holding means (16) comprises at least one locking means which is designed and adapted for positive and/or non-positive locking of the holding means (16) on the mounting base (12).

9. Conveying apparatus according to any one of claims 2 to 8, **characterised in that** the holding means (16) comprises a plurality of foot elements (17), wherein the foot elements (17) are spaced apart from each other.

10. Conveying apparatus according to any one of claims 2 to 9, **characterised in that** the holding means (16) and the foot element (17) are designed in one piece.

11. Conveying apparatus according to any one of claims 1 to 10, **characterised in that** the mounting base (12) is designed as a hollow profile.

12. Conveying apparatus according to claim 2, **characterised in that** the foot element (17) comprises at least two holding limbs (22) which completely encompass the outward facing square profile surfaces (21) in a positive locking manner.

13. Conveying apparatus according to claim 12, **characterised in that** a clasping element (23) is arranged on each of the holding limbs (22), the clasping element encompassing the square profile surfaces (20) respectively opposing each other on a partial region in a positive locking manner.

## Revendications

1. Installation de transport (10) pour des produits de l'industrie de traitement de poisson et de viande, comprenant
une bande transporteuse (11) pour transporter les produits dans une direction de transport (F),
au moins une base de montage (12) s'étendant le long d'au moins un tronçon de la bande transporteuse (11) ainsi qu'au moins une unité fonctionnelle (13) agencée pour interagir avec les produits,
chacune des unités fonctionnelles (13) étant disposée sur un moyen de maintien (16),
les moyens de maintien (16) étant conformés et agencés de façon que chacune des unités fonctionnelles (13) soit attachée de manière amovible, à l'aide des moyens de maintien (16), à la base de montage (12) et soit réglable au moins dans la direction de transport (F),
**caractérisée en ce que** la base de montage (12) est un profilé rectangulaire, le profilé rectangulaire étant disposé de façon qu'une des diagonales de section transversale du profilé rectangulaire s'étende au moins sensiblement parallèlement au plan de la bande transporteuse.

2. Installation de transport selon la revendication 1, **caractérisée en ce que** le moyen de maintien (16) comprend au moins un élément de pied (17) avec une zone de réception (18), la zone de réception (18) étant formée au moins partiellement de façon à correspondre à la section transversale de la base de montage (12).

3. Installation de transport selon la revendication 2, **caractérisée en ce que** la zone de réception (18) de l'élément de pied (17) est formée de façon que l'élément de pied (17) entoure la base de montage (12), par complémentarité de forme, au moins partiellement.

4. Installation de transport selon l'une des revendications 2 ou 3, **caractérisée en ce que** l'élément de pied (17) est formé de façon que l'élément de pied (17) soit attaché à la base de montage (12) par interaction de forces.

5. Installation de transport selon la revendication 4, **caractérisée en ce que** l'élément de pied (17) comprend au moins deux éléments de serrage (30) qui sont conformés et agencés pour attacher les éléments de pied (17) à la base de montage (12).

6. Installation de transport selon l'une des revendications 2 à 5, **caractérisée en ce que** l'élément de pied (17) et la base de montage (12) sont formés comme guidage linéaire.

7. Installation de transport selon la revendication 5, **caractérisée en ce que** les éléments de serrage (30) sont formés comme étriers (32).

8. Installation de transport selon l'une des revendications 1 à 7, **caractérisée en ce que** le moyen de maintien (16) comprend au moins un moyen d'arrêt qui est conformé et agencé pour arrêter le moyen de maintien (16) sur la base de montage (12) par complémentarité de forme et/ou par interaction de forces.

9. Installation de transport selon l'une des revendications 2 à 8, **caractérisée en ce que** le moyen de maintien (16) comprend plusieurs des éléments de pied (17), les éléments de pied (17) étant espacés les uns des autres.

10. Installation de transport selon l'une des revendications 2 à 9, **caractérisée en ce que** le moyen de maintien (16) et l'élément de pied (17) sont formés en une seule pièce.

11. Installation de transport selon l'une des revendications 1 à 10, **caractérisée en ce que** la base de montage (12) est formée comme profilé creux.

12. Installation de transport selon la revendication 2, **caractérisée en ce que** l'élément de pied (17) comprend au moins deux branches de maintien (22) qui entourent les faces (21) orientées vers l'extérieur du profilé rectangulaire entièrement par complémentarité de forme.

13. Installation de transport selon la revendication 12, **caractérisée en ce que** sur chacune des branches de maintien (22), un élément d'enserrage (23) respectif est disposé qui entoure les faces (20) opposées du profilé rectangulaire sur une zone partielle par complémentarité de forme.
